# EUROPEAN PATENT SPECIFICATION

(11) **EP 1 459 435 B1**
(45) Date of publication and mention of the grant of the patent: **02.05.2012**
(21) Application number: 02804292.7
(22) Date of filing: 02.12.2002
(51) Int. Cl.: H02P 3/22, F03D 7/02, H02K 3/47, H02K 21/24, H02P 3/12, F03D 7/04

(54) **SYNCHRONOUS ALTERNATING CURRENT GENERATOR INCORPORATING A BRAKING MECHANSIM**
SYNCHRON-WECHSELSTROMGENERATOR MIT EINEM BREMSMECHANISMUS
GENERATEUR DE COURANT ALTERNATIF SYNCHRONE DOTE D'UN MECANISME DE FREINAGE

(30) Priority: 01.12.2001 GB 0128808; 01.12.2001 GB 0128854
(43) Date of publication of application: 22.09.2004
(73) Proprietor: Iskra Wind Turbines Ltd., Epinal Way Loughborough LE11 3EH (GB)
(72) Inventor: WASTLING, Michael, Andrew, Leicester, Leicestershire LE2 2DD (GB); BALSON, John, Charles, Nottingham, Nottinghamshire NG3 4JZ (GB); CANN, Robert, James, Nottingham, Nottinghamshire NG4 3FX (GB); IRVING, David, Plymouth, Devon PL8 1JG (GB)
(74) Representative: Jackson, Derek Charles
(86) International application number: PCT/GB2002/005422
(87) International publication number: WO 2003/049256

(56) References cited:
- EP-A- 0 704 961
- US-A- 4 401 927
- US-A- 5 189 360
- SPOONER E ET AL: "Direct coupled, permanent magnet generators for wind turbine applications" IEE PROCEEDINGS: ELECTRIC POWER APPLICATIONS, INSTITUTION OF ELECTRICAL ENGINEERS, GB, vol. 143, no. 1, 8 January 1996 (1996-01-08), pages 1-8, XP006006369 ISSN: 1350-2352
- PATENT ABSTRACTS OF JAPAN vol. 2002, no. 06, 4 June 2002 (2002-06-04) -& JP 2002 044973 A (TOYO ELECTRIC MFG CO LTD), 8 February 2002 (2002-02-08)

## Description

This invention relates to a synchronous alternating current generator incorporating a braking mechanism, for example for use in a wind turbine.

It is common for wind turbines to employ a permanent magnet electrical generator for the purpose of generating electricity. A separate requirement in the design of a wind turbine is to provide a braking mechanism for bringing the wind turbine to rest during normal operation and/or in the event of a fault condition developing.

It is known to provide braking for an electrical generator by simply applying a resistive load, or a capacitative- resistive load, to the electrical output of the generator.

For certain generators a suitable resistance can be identified that will generate more braking torque than is provided by the wind and will slow the turbine.

Unfortunately, as the speed of the turbine decreases the electrical voltage produced by the generator also decreases and consequently the braking torque generated by the resistance also decreases. Potentially, the reduction in braking torque generated by the resistance is greater than the torque generated by the wind and the result may be that the turbine slows, but does not stop.

In order to ensure that the wind turbine slows substantially to a standstill, it is necessary to connect a very low resistive load to the electrical output of the generator, potentially even a short circuit. This is likely to be effective, but has the disadvantage that a very high electrical braking torque is imposed on the wind turbine if the short circuit is applied when the machine is operating at full speed.

In order to ensure the wind turbine slows substantially to a standstill it is common practice to employ a mechanical brake. However, a mechanical brake is expensive, particularly if it is intended to operate at high rotational speeds and at high wind speeds.

It follows that a simple resistive load on the generator is unlikely to offer satisfactory performance, and a mechanical brake is likely to be too costly. US 5189360 which is regarded as closest prior art document, describes an apparatus and method for electrically generating mechanical braking torque which employs direct field drive incorporating an AC alternator plus a current regulator. The stator windings of the alternator are directly coupled to the field winding via a full wave rectifier and the current regulator.

US 4401927 describes a direct current motor which includes a chopper in series with the field coil of the motor to regulate the current flowing through the armature of the motor during electrical braking when the motor functions as a generator to produce current. In addition, a shunting device is connected to the field coil to regulate the current flowing through the coil so that it is maintained at a value less than the armature current.

EP 0704961 describes a procedure and an apparatus for braking a synchronous motor magnetised with permanent magnets. A non-linear braking resistor is connected to the input connectors of the synchronous motor by means of which the stator windings of the synchronous motor are closed.

It is an object of the present invention to provide a synchronous alternating current generator incorporating a braking mechanism which overcomes or at least ameliorates the above disadvantages.

According to the present invention there is provided a synchronous alternating current generator incorporating a braking mechanism, wherein the braking mechanism comprises a coil providing a predetermined inductance and a predetermined resistance, and switch means wherein the switch means is configured to connect the coil across an alternating current output of the generator, whereby the inductance provides a reactance that is dependent on the frequency of the alternating current output of the generator, increasing as the rotational speed increases and consequently reducing the braking torque.

The generator may be a permanent magnet generator.

The generator may incorporates air coils.

The predetermined inductance and the predetermined resistance may be incorporated into a single coil.

The coil may be provided with a core to tune the inductance of the coil. The core may be constructed to maximise eddy current losses and losses associated with reverse residual magnetism. Additionally or alternatively, the core may be constructed such that, in use, it is saturated by magnetic flux.

The predetermined resistance of the coil may be obtained by determining the ratio of the length to the cross-sectional area of a wire forming the coil. The predetermined resistance of the coil may additionally be obtained by selecting the material of the wire.

The predetermined inductance of the coil may be obtained by determining the number of turns and dimensions of the coil. The predetermined inductance of the coil may additionally be obtained by providing a core for the coil.

The mass of the coil may be selected to absorb sufficient energy to bring the generator to rest without overheating.

The generator may provide multiple phases and a coil and switch means may be provided for each phase.

The present invention also relates to a wind turbine incorporating a synchronous alternating current generator as hereinbefore defined.

For a better understanding of the present invention and to show more clearly how it may be carried into effect reference will now be made, by way of example, to the accompanying drawings in which:
Figure 1 is a plan view of part of a stator assembly of one embodiment of an electrical generator suitable for use in the present invention;
Figure 2 is a section taken along the line A-A shown in Figure 1;
Figure 3 is a perspective view of the stator assembly part shown in Figures 1 and 2 attached to a main shaft to form a stator assembly;
Figure 4 is a perspective view of a rotor assembly for use with the stator assembly shown in Figures 1 to 3, a top plate of the rotor assembly being partly cut away for clarity;
Figure 5 is a perspective view of the electrical generator incorporating the rotor assembly of Figure 4 and the stator assembly of Figures 1 to 3, a top plate of the rotor assembly being partly cut away for clarity;
Figure 6 is a diagrammatic illustration of one embodiment of an electrical generator provided with a braking mechanism according to the present invention;
Figure 7 is a diagrammatic illustration of another embodiment of an electrical generator according to the present invention provided with a braking mechanism according to the present invention;
Figure 8 is a graph illustrating a number of relationships between rotational speed of the generator in relation to torque; and
Figure 9 is a graph illustrating a number of further relationships between rotational speed of a generator in relation to torque.

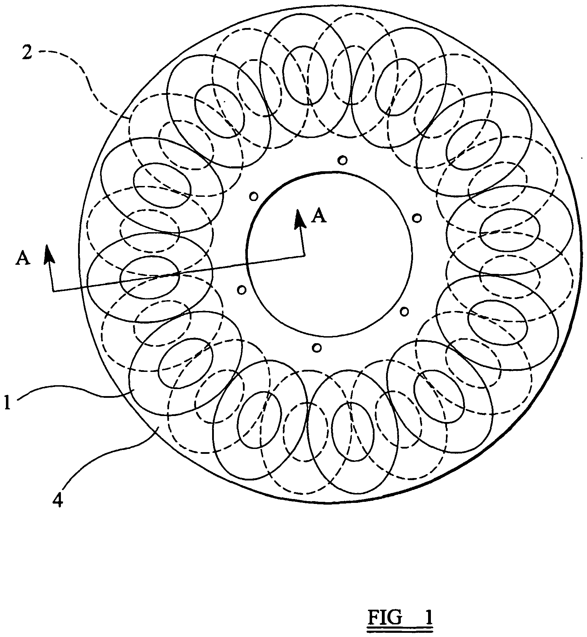

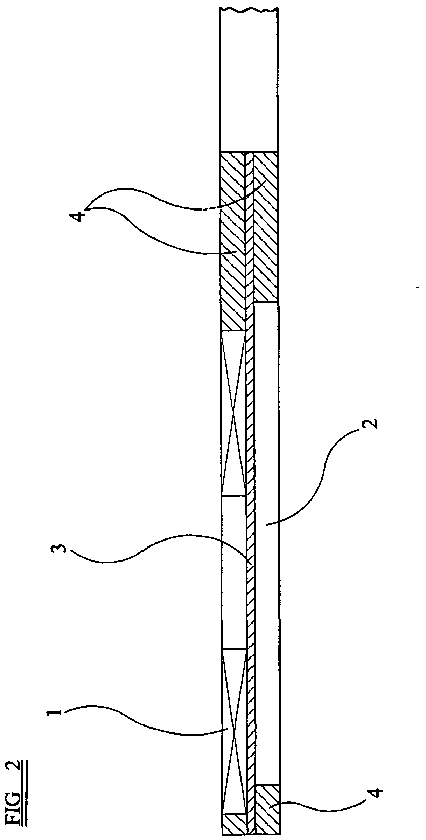

Figures 1 and 2 show part of a stator assembly of a permanent magnet synchronous alternating current electrical generator comprising an annular body 3 of glass fibre reinforced plastics material or other suitable non-magnetic and non-electrically conducting material. Bonded to one side of the annular body 3 is a single layer of flat conductor coils 1 which are in the form of air coils of copper wire, the coils 1 being arranged substantially side-by-side in an annular configuration coaxial with the axis of the annular body 3. Bonded to the other side of the annular body 3 is a further single layer of flat conductor coils 2 which are also in the form of air coils of copper wire. The coils 2 are arranged substantially side-by-side in an annular configuration coaxial with the axis of the annular body 3 and at a radius substantially the same as the layer of coils 1. The assembly of the annular body 3 and the layers of coils 1 and 2 is embedded in a resin material 4, such as an epoxy or other plastics resin material, to form part of a stator assembly with the resin material providing location, protection and electrical insulation for the coils.

As can be seen from Figure 1, the two layers of flat coils 1 and 2 are circumferentially offset relative to each other by an amount corresponding to half the circumferential dimension of the coils, that is by an amount corresponding substantially to the pitch of adjacent coils divided by the number of layers.

If desired, the stator assembly can be provided with thin walls at the axial faces thereof, in order to protect the coils and stiffen the stator assembly, without significantly reducing the ability of the coils to be cooled by air flow.

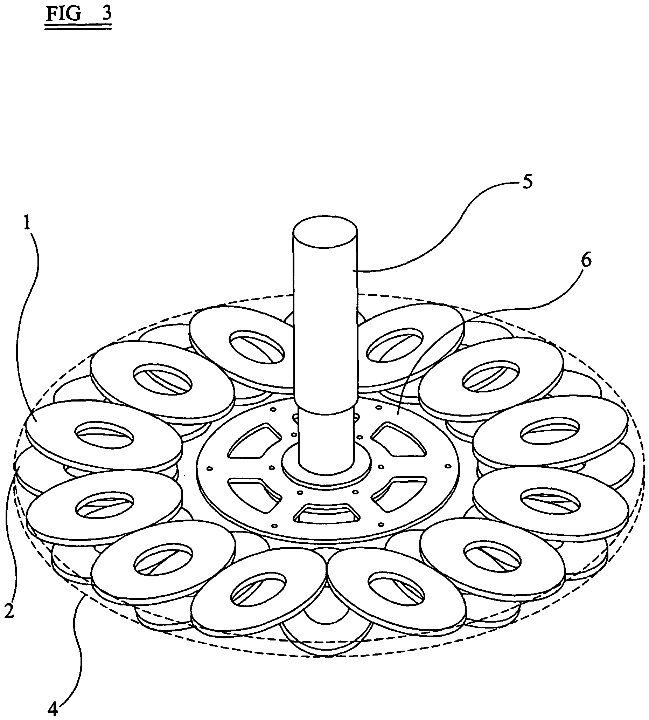

As can be seen from Figure 3, the stator assembly is completed by securing the stator component of Figures 1 and 2 to a main shaft 5 by way of a spoked stator hub 6 which is fastened to the stator component of Figures 1 and 2 by suitable fastening means. The spokes of the stator hub 6 allow air to pass either side of the stator assembly for cooling purposes.

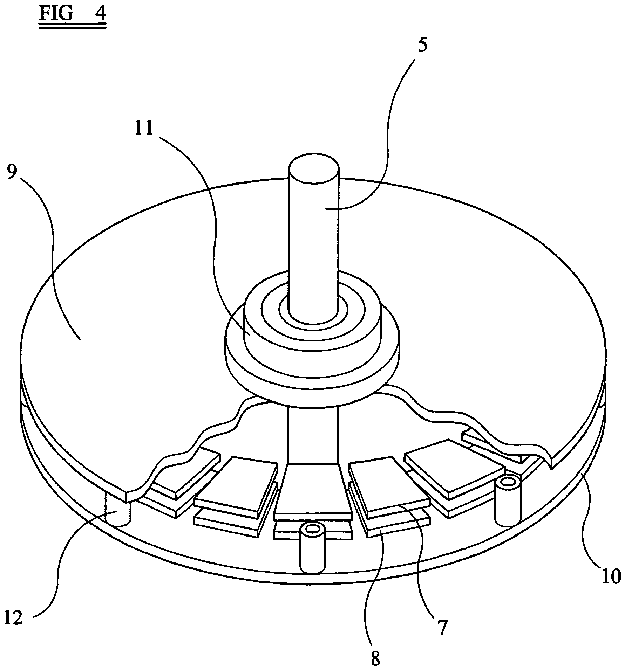

Figure 4 shows a rotor assembly which comprises two parallel plates 9 and 10 which are secured together around the peripheries thereof by a plurality of spacers 12 such that the plates 9 and 10 are not rotatable relative to each other. The plates 9 and 10 are rotatably mounted about a common axis on the main shaft 5 by way of a bearing 11. The plates 9 and 10 are each made of a single piece of soft magnetic material such as mild steel.

By soft magnetic material there is meant herein a material which is magnetisable in a magnetic field, but is not permanently magnetisable.

A plurality of permanent magnets 7 are secured to the plate 9 on that face thereof facing plate 10, the magnets 7 being arranged side-by-side in an annular array coaxial with the axis of the main shaft 5 and at a radius corresponding substantially to that of the coils 1 and 2. The magnets 7 are arranged radially such that poles of opposing polarity are adjacent in adjoining magnets.

A similar plurality of permanent magnets 8 are secured to the plate 10 on that face thereof facing plate 9, the magnets 8 being arranged side-by-side in an annular array coaxial with the axis of the main shaft 5 and at a radius corresponding substantially to that of the magnets 7 and the coils 1 and 2. The magnets 8 are arranged radially such that poles of opposing polarity are adjacent in adjoining magnets and such that each magnet 8 faces a corresponding magnet 7 with poles of opposing polarity opposite each other.

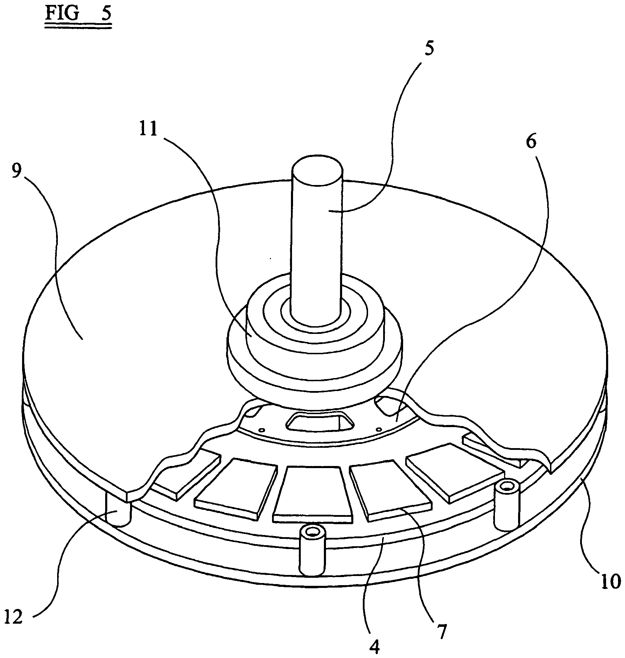

Figure 5 shows the stator assembly of Figure 3 positioned within the rotor assembly of Figure 4 with the coils 1 and 2 positioned in an air gap of predetermined magnitude between the two annular arrays of magnets 7 and 8 which are secured to the plates 9 and 10.

The configuration of the coils 1 and 2 as flat coils and the position of the coils lying flat on opposing faces of the annular body 3 allows the coils to be located close to the permanent magnets 7 and 8 thus permitting the size of the air gap to be kept to a minimum, while at the same time presenting substantially the entire surface area of each coil for cooling purposes. The annular body can be as thick as may be required for dimensional stability without reducing the ability of the coils to cool by releasing heat at the exposed face thereof.

The use of a single piece of soft magnetic material for each of the plates 9 and 10, that is the plates are not laminated, has the advantage that the plates 9 and 10 are economical to produce and are sufficiently strong to support further components, such as a blade of a wind turbine. However, a unitary construction for the plates 9 and 10 gives rise to eddy current losses within the plates. The eddy current losses are in turn reduced by providing the two layers of flat coils which are circumferentially offset relative to each other by an amount corresponding to half the circumferential dimension of the coils.

The electrical generator illustrated in Figures 1 to 5 is a three phase machine in which the angular separation between adjacent coils is one and one third times the angular separation between adjacent magnets (the angular separation being defined as the angle between the centres of adjacent coils or magnets, as the case may be, measured about the axis of rotation). Thus, in the illustrated embodiment there are twelve coils 1, twelve coils 2 and sixteen magnets 7 and sixteen magnets 8. The coils 1 and 2 are connected such that the phases alternate between the layers of coils. Thus, a first phase may be a coil 1, a second phase is then a coil 2 partly overlapping the coil 1 of the first phase, a third phase is then a coil 1 adjacent to the coil 1 of the first phase and partly overlapping the coil 2 of the second phase. The pattern then continues with the first phase being a coil 2 adjacent to the coil 2 of the second phase and partly overlapping the coil 1 of the third phase, and so on.

It will be appreciated that other forms of synchronous alternating current generators can be employed in the present invention and may be, for example, permanent magnet generators or electromagnet generators.

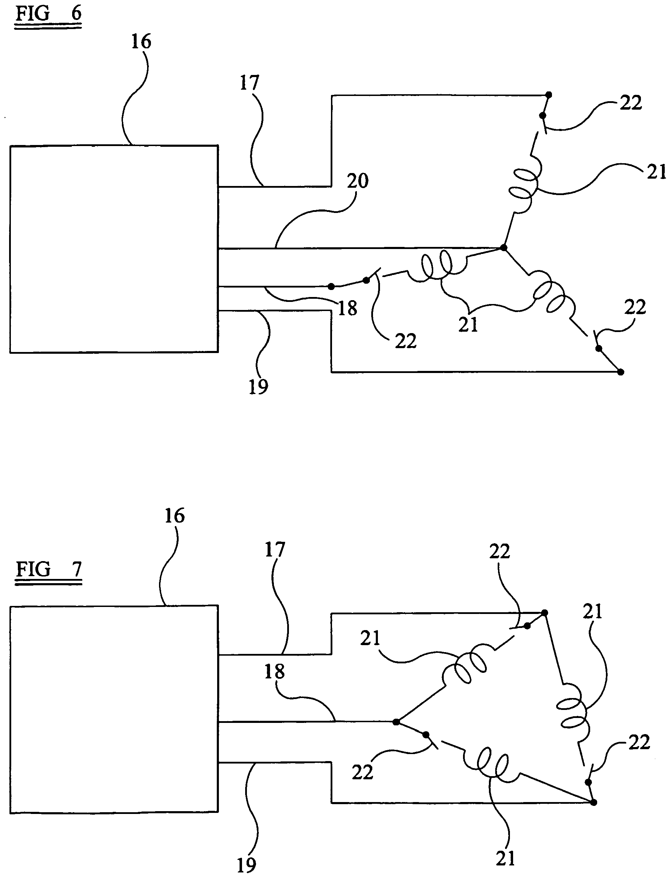

The synchronous alternating current generator is connected to a braking mechanism as illustrated, for example, in Figure 6 or in Figure 7.

Figure 6 illustrates diagrammatically the braking mechanism in combination with a star connected three phase generator 16. The three phases 17, 18 and 19 are each connected to a neutral line 20 by way of a combined inductive and resistive coil 21 and a switch 22. The coils 21 each have a predetermined inductance and a predetermined resistance as will be explained in more detail hereinafter. The switches 22 are all linked so as to switch and latch simultaneously.

Figure 7 illustrates diagrammatically the braking mechanism in combination with either a delta or star connected three phase generator 16. The three phases 17, 18 and 19 are interconnected by way of a combined inductive and resistive coil 21 and a switch 22. The coils 21 each have a predetermined inductance and a predetermined resistance as will be explained in more detail hereinafter. The switches 22 are all linked so as to switch and latch simultaneously.

The coils 21 may be in the form of coils of wire of copper or other suitable material with an optional core to tune the inductance of the coil. It may be desirable to maximise the losses in the core, including those associated with eddy currents and reverse residual magnetism, in order to reduce the proportion of the energy that needs to be dissipated within the coil itself. This may allow a smaller coil to be used. The ratio of the length of the wire to its cross-sectional area can be chosen to produce a predetermined resistance, while the number of turns, the dimensions of the coil and the nature of any core can be chosen to produce a predetermined inductance. The total mass of the wire should be sufficient to absorb the energy dissipated by the load during braking without becoming too hot. Thus, no separate resistive load is required.

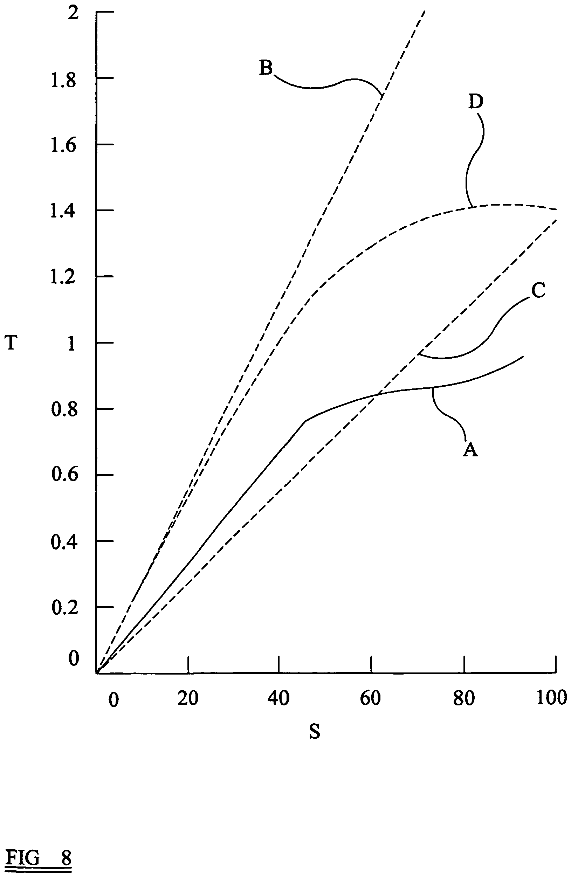

Figure 8 is a graph illustrating a number of relationships between rotational speed S of the generator as a percentage of the maximum design speed in relation to torque T as a ratio of the actual torque to the rated torque. The solid line A in Figure 8 represents the maximum aerodynamic torque that a particular wind turbine incorporating the generator at its design wind speed as a function of rotational speed.

In order to reduce the rotational speed of the wind turbine, and hence the rotational speed of the generator, the generator must provide a torque greater than the aerodynamic torque, that is the generator must produce a torque which falls above the solid line A of Figure 8.

The uppermost dotted line B represents the braking torque produced by the generator in the event of a short circuit. Line B shows that the generator is able to apply a very high torque at high rotational speeds. Such a high torque at high speeds is unsatisfactory because it may cause damage to the generator and/or the remainder of the wind turbine.

Comparing line B with the solid line A which represents maximum aerodynamic torque, it is clear that with a short circuit applied the generator is capable of slowing the wind turbine to a very low rotational speed. It follows that a short circuit is useful for preventing the wind turbine from starting if it is initially stationary, but it is not suitable as part of a braking mechanism to slow the turbine from high rotational speeds.

The lowermost dotted line C represents the braking torque produced by the generator for a resistive load that is selected to achieve a braking torque of substantially 1.4 times the aerodynamic torque at full rotational speed. Line C is above the solid line A only when the rotational speed is above about 60 percent of maximum rotational speed. It follows that in this case the wind turbine may not slow below this speed.

Where a coil 21 is provided with a core, it may be desirable to design the core such that the magnetic flux density saturates the core at high generator speeds. This can provide further control over the generator torque-speed braking curve.

Thus, a purely resistive load is not satisfactory as a braking mechanism because a load that generates sufficient torque to slow the turbine substantially to a standstill generates a potentially damaging braking torque at high rotational speeds, while a load that generates a lower braking torque at high rotational speeds is insufficient to slow the turbine substantially to a standstill.

The intermediate dotted line D illustrates the generator braking torque resulting from a combined inductive and resistive load in which the resistive element of the load can be used to determine the shape of the lower part of the line D, while the inductive element of the load can be used to determine the shape of the upper part of the line D. The inductance provides a reactance that is dependent on the frequency of the output of the generator, and is therefore dependent on the rotational speed of the wind turbine, increasing as the rotational speed increases and consequently reducing the braking torque. Thus, the line D demonstrates in the upper part of the line the same maximum braking torque as line C, but demonstrates in the lower part of the line similar characteristics to line B. The line C is always above the solid line A representing the aerodynamic torque and is therefore able to apply braking torque at all speeds of the turbine from high rotational speeds down to very low rotational speeds.

Thus line D demonstrates that it is possible to employ a combined resistive and inductive load to enable a synchronous alternating current generator to slow a wind turbine both at high rotational speeds and at low rotational speeds without potentially damaging the generator and/or the remainder of the turbine and in a particularly simple and convenient manner without requiring the use of multiple resistances, or a combination of resistance and capacitance, and without requiring a separate mechanical brake. Thus the combined resistive and inductive load functions as a combined emergency and parking braking mechanism.

Additional monitoring and switching circuits would be required to apply the brake in the event of a fault condition developing. However, such components and their use are well known to a person skilled in the art. Additional components may also be required to reduce the magnitude of voltage transients and possible electromagnetic interference associated with switching. However, such components and their use are again well known to the skilled person.

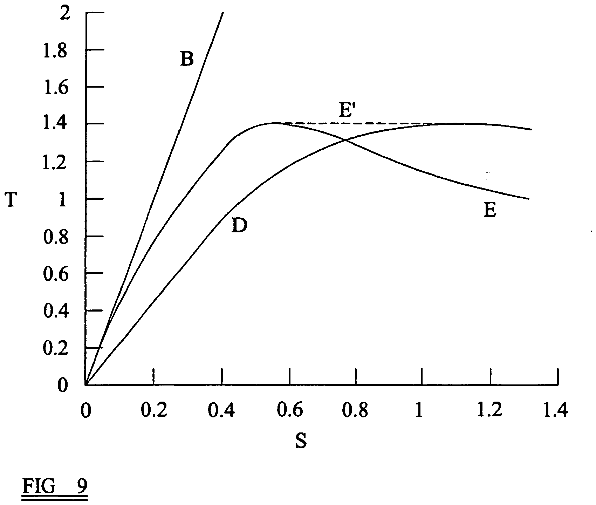

Figure 9 is a graph similar to Figure 8 illustrating a number of further relationships between rotational speed S of the generator as a function of maximum speed in relation to torque as a ratio of the actual torque relative to the torque that has to be provided to decelerate the machine. In practice, a brake is required that achieves T=1.4 at S=1 and has a torque as high as possible (less than T=1.4) at lower rotational speeds. The various lines B, D, E and E' in Figure 9 are shown to illustrate the effects of various design parameters.

Any synchronous generator has a characteristic inductance and resistance. If the outputs of the generator are short circuited then the generator will provide a reaction, or braking, torque which varies with rotational speed. At low rotational speeds, the reaction torque is small, but initially increases substantially linearly with increasing rotational speed. The rate of increase in torque eventually decreases and there is a rotational speed of maximum braking torque, beyond which the torque decreases with increasing rotational speed.

By replacing the short circuit with a combined inductance and resistance it has been found that the relationship between braking torque and rotational speed can be modified to achieve desired braking characteristics. Increasing the inductance reduces the maximum braking torque and also reduces the rotational speed at which the maximum braking torque is achieved. Increasing the resistance has no impact on the maximum braking torque, but increases the rotational speed at which the maximum torque is achieved.

The proportion of the total energy dissipated during braking that is used to heat the combined inductance and resistance depends only on the resistance of the load compared with the resistance of the generator.

Thus, referring to Figure 9, the following procedure can be used to design a suitable combined inductive/resistive brake.

The first step is to ensure the generator is designed to be able to produce a maximum braking torque that exceeds the required braking torque and to ensure the resistance of the generator windings is sufficiently low that the required braking torque can be achieved at a rotational speed that is below the speed at which this braking torque is required. Line B of Figure 9 illustrates the short circuit characteristics of a generator that fulfils these requirements.

The second step is to identify the inductance to be added to achieve the required maximum braking torque. The effect of the inductance is to modify line B representing the short circuit condition to result in line E.

The third step is to identify the resistance that is required to adjust the rotational speed at which the maximum braking torque is achieved. Thus, line D illustrates that line E is modified simply by increasing the resistance.

The fourth step is to calculate the total energy to be dissipated during braking and to calculate the proportion of this energy to be dissipated in the load, based on the resistance of the load as a proportion of the total circuit resistance. The figure for the energy is then used to calculate the required mass of the load based on an allowable temperature rise.

Given the values for inductance, resistance and mass, the coils can be designed.

In an alternative third step, the resistance is maintained as low as possible and the inductor is designed so that the flux saturates the core of the inductance a little above the speed at which the maximum torque is achieved. This results in a modification of line E in which the braking torque does not decreases with increasing rotational speed as illustrated in idealised form as line E'. In practice, the shape of the right-hand side of the line is sensitive to the magnetic characteristics of the core material or materials and the geometry of the inductor and core. Clearly, the shape of line E' is preferable to that of line D. This alternative also has the advantages that, since the heat generated in the coil during braking (which is directly related to the coil resistance) is reduced, the coil can be smaller because it does not require such a large thermal mass. Thus, this alternative can give rise to a less expensive braking mechanism as well as to improved braking characteristics.

The use of air coils 1 and 2 in the generator result in a lower inductance in the generator than would otherwise be the case and this is believed to increase the braking torque resulting from a short circuit. Thus, the use of a combined resistive and inductive load is particularly effective with generators in which the inductance is sufficiently low that a short circuit would produce a higher braking torque than the minimum necessary to slow the machine. The use of a combined resistance and inductance permits the shape of the torque/speed curve to be tuned to obtain improved braking characteristics over a wide speed range.

## Claims

1. A synchronous alternating current generator incorporating a braking mechanism, **characterised in that** the braking mechanism comprises a coil (21) providing a predetermined inductance and a predetermined resistance, and switch means (22) **characterised in that** the switch means (22) is configured to connect the coil across an alternating current output of the generator, whereby the inductance provides a reactance that is dependent on the frequency of the alternating current output of the generator, increasing as the rotational speed increases and consequently reducing the braking torque.

2. A generator as claimed in claim 1, **characterised in that** the generator is a permanent magnet generator.

3. A generator as claimed in claim 1 or 2, **characterised in that** the generator incorporates air coils (1,2).

4. A generator as claimed in any preceding claim, **characterised in that** the predetermined inductance and the predetermined resistance are incorporated into a single coil (21).

5. A generator as claimed in any preceding claim, **characterised in that** the coil (21) is provided with a core.

6. A generator as claimed in claim 5, **characterised in that** the core is constructed to maxim ise eddy current losses and losses associated with reverse residual magnetism.

7. A generator as claimed in claim 5 or 6, **characterised in that** the core is constructed such that, in use, it is saturated by magnetic flux.

8. A generator as claimed in any preceding claim, **characterised in that** the predetermined resistance of the coil (21) is obtained by determining the ratio of the length to the cross-sectional area of a wire forming the coil.

9. A generator as claimed in claim 8, **characterised in that** the predetermined resistance of the coil (21) is additionally obtained by selecting the material of the wire.

10. A generator as claimed in any preceding claim, **characterised in that** the predetermined inductance of the coil (21) is obtained by determining the number of turns and dimensions of the coil.

11. A generator as claimed in claim 10, **characterised in that** the predetermined inductance of the coil (21) is additionally obtained by providing a core for the coil.

12. A generator as claimed in any preceding claim, **characterised in that** the mass of the coil is selected to absorb sufficient energy to bring the generator to rest without overheating.

13. A generator as claimed in any preceding claim, **characterised in that** the generator provides multiple phases (17, 18, 19) and a coil (21) and switch means (22) is provided for each phase.

14. A wind turbine incorporating a synchronous alternating current generator as claimed in any preceding claim.

## Patentansprüche

1. Synchroner Wechselstromgenerator mit einem Bremsmechanismus, **dadurch gekennzeichnet, dass** der Bremsmechanismus eine Spule (21), die eine(n) vorbestimmte(n) Induktivität und Widerstand erzeugt, und ein Schaltmittel (22) umfasst, **dadurch gekennzeichnet, dass** das Schaltmittel (22) zum Schalten der Spule über einen Wechselstromausgang des Generators konfiguriert ist, so dass die Induktivität eine Reaktanz erzeugt, die von der Frequenz des Wechselstromasugangs des Generatos abhängig ist und mit zunehmender Drehgeschwindigkeit zunimmt und demzufolge das Bremsmoment reduziert.

2. Generator nach Anspruch 1, **dadurch gekennzeichnet, dass** der Generator ein Dauermagnetgenerator ist.

3. Generator nach Anspruch 1 oder 2, **dadurch gekennzeichnet, dass** der Generator Luftspulen (1, 2) aufweist.

4. Generator nach einem der vorherigen Ansprüche, **dadurch gekennzeichnet, dass** die/der vorbestimmte Induktivität und Widerstand in eine einzige Spule (21) integriert sind.

5. Generator nach einem der vorherigen Ansprüche, **dadurch gekennzeichnet, dass** die Spule (21) mit einem Kern versehen ist.

6. Generator nach Anspruch 5, **dadurch gekennzeichnet, dass** der Kern so konstruiert ist, dass er Wirbelstromverluste und mit reversem Restmagnetismus assoziierte Verluste maximiert.

7. Generator nach Anspruch 5 oder 6, **dadurch gekennzeichnet, dass** der Kern so konstruiert ist, dass er beim Gebrauch durch Magnetfluss gesättigt wird.

8. Generator nach einem der vorherigen Ansprüche, **dadurch gekennzeichnet, dass** der vorbestimmte Widerstand der Spule (21) durch Bestimmen des Verhältnisses zwischen Länge und Querschnittsfläche eines die Spule bildenden Drahts erhalten wird.

9. Generator nach Anspruch 8, **dadurch gekennzeichnet, dass** der vorbestimmte Widerstand der Spule (21) zusätzlich durch Wählen des Materials des Drahts erhalten wird.

10. Generator nach einem der vorherigen Ansprüche, **dadurch gekennzeichnet, dass** die vorbestimmte Induktivität der Spule (21) durch Bestimmen der Zahl der Windungen und der Abmessungen der Spule erhalten wird.

11. Generator nach Anspruch 10, **dadurch gekennzeichnet, dass** die vorbestimmte Induktivität der Spule (21) zusätzlich durch Bereitstellen eines Kerns für die Spule erhalten wird.

12. Generator nach einem der vorherigen Ansprüche, **dadurch gekennzeichnet, dass** die Masse der Spule so gewählt ist, dass sie genügend Energie absorbiert, um den Generator ohne zu überhitzen zur Ruhe zu bringen.

13. Generator nach einem der vorherigen Ansprüche, **dadurch gekennzeichnet, dass** der Generator mehrere Phasen (17, 18, 19) hat und für jede Phase eine Spule (21) und ein Schaltmittel (22) vorgesehen sind.

14. Windturbine mit einem synchronen Wechselstromgenerator nach einem der vorherigen Ansprüche.

## Revendications

1. Générateur de courant alternatif synchrone comportant un mécanisme de freinage, **caractérisé en ce que** le mécanisme de freinage comprend une bobine (21) fournissant une inductance prédéterminée et une résistance prédéterminée, et un moyen de commutation (22), **caractérisé en ce que** le moyen de commutation (22) est configuré pour connecter la bobine entre les bornes d'une sortie de courant alternatif du générateur, grâce à quoi l'inductance fournit une réactance qui dépend de la fréquence de la sortie de courant alternatif du générateur, augmentant avec l'augmentation de la vitesse de rotation et réduisant par conséquent le couple de freinage.

2. Générateur selon la revendication 1, **caractérisé en ce que** le générateur est un générateur à aimant permanent.

3. Générateur selon la revendication 1 ou 2, **caractérisé en ce que** le générateur comporte des bobines à air (1, 2).

4. Générateur selon l'une quelconque des revendications précédentes, **caractérisé en ce que** l'inductance prédéterminée et la résistance prédéterminée sont incorporées dans une seule bobine (21).

5. Générateur selon l'une quelconque des revendications précédentes, **caractérisé en ce que** la bobine (21) est munie d'un noyau.

6. Générateur selon la revendication 5, **caractérisé en ce que** le noyau est construit pour maximiser les pertes par courants parasites et les pertes associées avec le magnétisme résiduel inversé.

7. Générateur selon la revendication 5 ou 6, **caractérisé en ce que** le noyau est construit de manière à être, en utilisation, saturé par le flux magnétique.

8. Générateur selon l'une quelconque des revendications précédentes, **caractérisé en ce que** la résistance prédéterminée de la bobine (21) est obtenue par détermination du rapport de la longueur à la section transversale d'un fil formant la bobine.

9. Générateur selon la revendication 8, **caractérisé en ce que** la résistance prédéterminée de la bobine (21) est en outre obtenue par sélection du matériau du fil.

10. Générateur selon l'une quelconque des revendications précédentes, **caractérisé en ce que** l'inductance prédéterminée de la bobine (21) est obtenue par détermination du nombre de spires et des dimensions de la bobine.

11. Générateur selon la revendication 10, **caractérisé en ce que** l'inductance prédéterminée de la bobine (21) est en outre obtenue par la fourniture d'un noyau pour la bobine.

12. Générateur selon l'une quelconque des revendications précédentes, **caractérisé en ce que** la masse de la bobine est sélectionnée pour absorber une énergie suffisante pour amener le générateur à l'arrêt sans surchauffe.

13. Générateur selon l'une quelconque des revendications précédentes, **caractérisé en ce que** le générateur fournit des phases multiples (17, 18, 19) et **en ce qu'**une bobine (21) et un moyen de commutation (22) sont fournis pour chaque phase.

14. Eolienne comportant un générateur de courant alternatif synchrone selon l'une quelconque des revendications précédentes.
